(19) Europäisches Patentamt / European Patent Office / Office européen des brevets

(11) **EP 3 835 716 B1**

(12) **FASCICULE DE BREVET EUROPEEN**

(45) Date de publication et mention
de la délivrance du brevet:
**05.11.2025 Bulletin 2025/45**

(21) Numéro de dépôt: **20213463.1**

(22) Date de dépôt: **11.12.2020**

(51) Classification Internationale des Brevets (IPC):
*G01B 7/16* (2006.01)    *B61K 9/12* (2006.01)
*G01B 21/32* (2006.01)    *G01B 7/28* (2006.01)
*G01B 7/293* (2006.01)    *G01M 17/10* (2006.01)
*B61L 15/00* (2006.01)

(52) Classification Coopérative des Brevets (CPC):
**G01B 7/16; B61K 9/12; B61L 15/0081;
G01B 7/282; G01B 7/293; G01B 21/32;
G01M 17/10**

(54) **PROCÉDÉ DE CONTRÔLE DE DÉFORMATION DE ROUE, DISPOSITIF ASSOCIÉ ET SYSTÈME COMPRENANT UN TEL DISPOSITIF**

VERFAHREN ZUR KONTROLLE DER RADVERFORMUNG, ENTSPRECHENDE VORRICHUNG UND ENTSPRECHENDES SYSTEM, DAS DIESE VORRICHTUNG UMFASST

METHOD FOR CONTROLLING WHEEL DEFORMATION, ASSOCIATED DEVICE AND SYSTEM INCLUDING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2019 FR 1914413**

(43) Date de publication de la demande:
**16.06.2021 Bulletin 2021/24**

(73) Titulaire: **ALSTOM Holdings
93400 Saint-Ouen-sur-Seine (FR)**

(72) Inventeur: **BONIN, Eric
38200 JARDIN (FR)**

(74) Mandataire: **Plasseraud IP
104 Rue de Richelieu
CS92104
75080 Paris Cedex 02 (FR)**

(56) Documents cités:
EP-A- 1 559 625          EP-A1- 2 666 697
EP-B1- 1 559 625         EP-B1- 2 666 697
CN-A- 109 334 708        DE-A1- 102018 108 992
US-A- 4 815 004          US-A1- 2003 160 133
US-A1- 2018 297 619

**Description**

L'invention concerne le contrôle de déformation de roue.

Le document US 4 815 004 A décrit un procédé de caractérisation des efforts vers l'avant ou vers l'arrière induit par un pneu, et un calcul de rayon effectif instantané dudit pneu. US 2003/160133 A1 décrit un procédé de contrôle de déformation de roue avec capteur de déplacement de la roue selon un axe vertical et un capteur de vitesse.

Le document EP 1 559 625 présente un procédé de contrôle de déformation d'une roue d'un véhicule ferroviaire, comportant une étape d'obtention de la variation du rapport cyclique d'une roue dentée lors de sa rotation, les données permettant d'obtenir ces variations étant mesurées par un capteur auquel est connecté un dispositif de contrôle de déformation de roue. Le rapport cyclique correspond au rapport du temps pendant lequel le capteur est en face de la tête d'une dent de la roue dentée sur le temps pendant lequel le capteur est en face de la tête de la dent de la roue dentée ajouté au temps pendant lequel le capteur est en face du creux précédent ou suivant cette roue dentée. Les variations temporelles du rapport cyclique permettent de déterminer les déformations relatives de la roue contrôlée.

Toutefois, un tel procédé de contrôle de déformation ne permet que de déterminer une déformation relative de la roue contrôlée et ne permet que de connaitre partiellement l'état de la roue, ce qui ne donne pas entière satisfaction pour assurer la sécurité des opérations du véhicule ferroviaire.

A cet effet, l'invention a pour objet un procédé de contrôle de déformation d'une roue conforme à la revendication 1.

Ainsi, le procédé de contrôle de déformation de roue permet non seulement de déterminer les déformation d'une roue mais permet par ailleurs de quantifier ces déformations et d'évaluer la forme réelle de la roue.

Suivant d'autres aspects avantageux de l'invention, le procédé de contrôle de déformation de roue comprend une ou plusieurs des caractéristiques des revendications 2 et 3.

L'invention concerne en outre un système de contrôle de déformation de roue conforme à la revendication 4, un autre aspect avantageux du système étant revendiqué dans la revendication 5.

L'invention concerne également un véhicule conforme à la revendication 6.

Les caractéristiques et avantages de l'invention apparaîtront plus clairement à la lecture de la description qui va suivre, donnée uniquement à titre d'exemple non limitatif, et faite en référence aux dessins annexés, sur lesquels :

[Fig 1] la figure 1 est une représentation schématique d'un véhicule ferroviaire équipé d'un système de contrôle de déformation de roue comprenant un capteur et un dispositif de contrôle de déformation de roue selon l'invention ;
[Fig 2] la figure 2 est une représentation schématique d'une roue équipée d'un système de contrôle de déformation de roue comprenant un capteur et un dispositif de contrôle de déformation de roue selon l'invention ;
[Fig 3] la figure 3 est une représentation schématique de l'évolution temporelle du signal généré par le capteur ;
[Fig 4] la figure 4 est un exemple de fenêtre de pondération utilisée dans le procédé de contrôle de déformation d'une roue ;
[Fig 5] la figure 5 est un exemple de l'évolution d'un signal généré par le capteur représentant la mesure du temps entre deux dents successives d'une roue dentée du capteur représenté en figure 2, en fonction d'un numéro d'échantillon de mesure ;
[Fig 6] la figure 6 est un exemple de l'évolution d'un signal généré par le capteur en fonction du signal généré en figure 5, représentant la valeur du rayon de la roue en fonction du numéro d'échantillon ; et
[Fig 7] la figure 7 est une représentation schématique de la déformation d'une roue obtenue à partir du signal généré en figure 6.

Dans la description qui suit, on considère une base orthonormée directe (X, Y, Z). La direction d'élévation Z est définie selon la hauteur du véhicule et correspond par exemple à la direction verticale lorsque le véhicule est sur une voie horizontale. La direction longitudinale X correspond à la direction avant-arrière du véhicule et la direction transversale Y correspond à la largeur du véhicule.

Les termes « supérieur » et « inférieur » ainsi que « haut » et « bas » sont définis par rapport à la direction d'élévation Z. Les termes « gauche » et « droite » sont définis par rapport à la direction transversale Y dans le sens normal de circulation du véhicule.

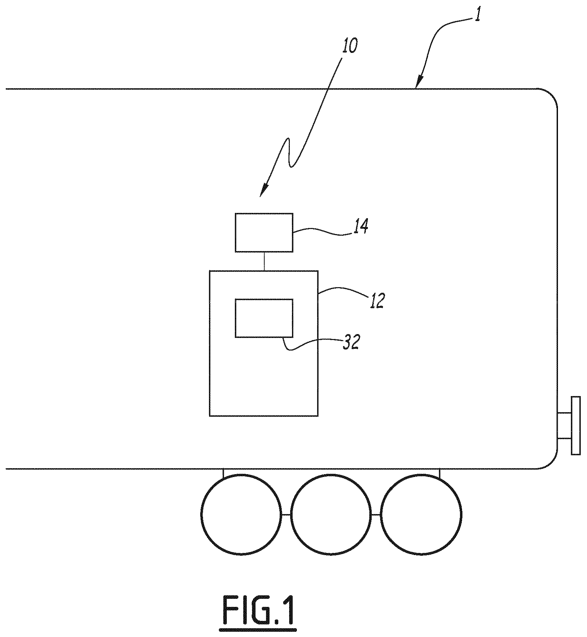

Le système de contrôle de déformation de roue 10 représenté schématiquement sur la figure 1 est destiné à être mis en œuvre sur un véhicule ferroviaire 1 et vise à évaluer le rayon d'une roue 4 en une multiplicité de positions angulaires.

Le véhicule ferroviaire 1 est par exemple une locomotive, un wagon ou une automotrice.

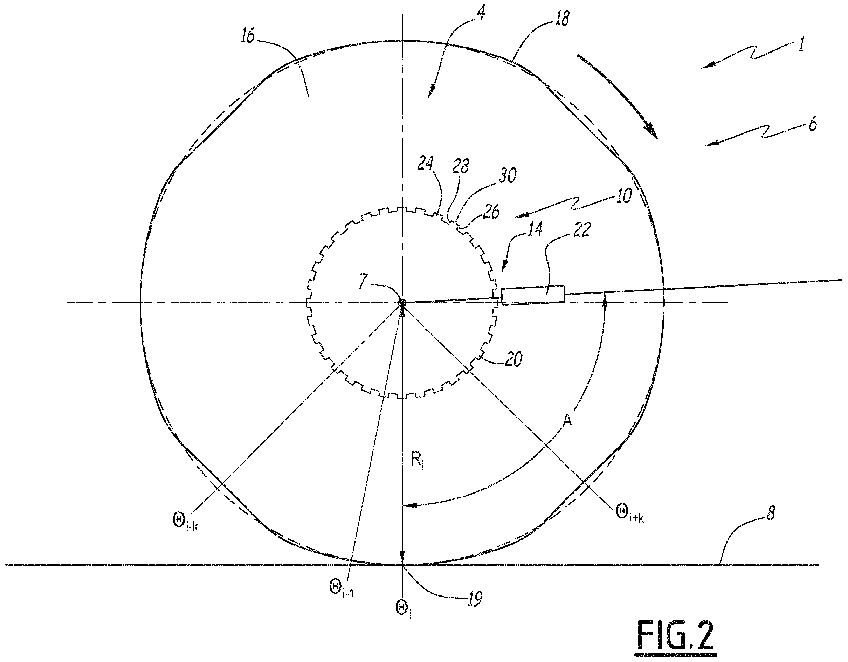

Le véhicule ferroviaire 1 comprend un essieu 6, l'essieu 6 comprenant la roue 4 et un arbre 7 (figure 2). La roue 4 est mobile en rotation autour d'un axe Y-Y de l'arbre 7. Lorsque le véhicule ferroviaire 1 roule sur une voie, la roue 4 est en appui et roule sur une surface de roulement 8.

Le système de contrôle de déformation de roue 10 comporte un dispositif de contrôle de déformation de roue 12 ainsi qu'un capteur 14 destiné à mesurer un paramètre caractérisant la vitesse angulaire de la roue 4 (figure 1).

Comme le montre la figure 2, la roue comprend une jante 16 ainsi qu'une bande de roulement 18. La jante 16 relie l'arbre 7 à la bande de roulement 18. La bande de roulement 18 est destinée à être en appui et à rouler sur la surface de roulement 8 en un point de contact 19

La roue 4 comprend une pluralité de position angulaires prédéfinies. En particulier, la roue comprend n positions angulaires prédéfinies $\theta_i$ avec i compris entre 1 et n. Un rayon de roue $R_i$ est associé à chaque position angulaire $\theta_i$.

Le capteur 14 comprend une roue dentée 20 ainsi qu'un organe de détection 22. Le capteur 14 est par exemple un composant d'un anti enrayeur.

La roue dentée 20 est mobile en rotation autour de l'axe Y-Y de l'arbre 7. La roue dentée 20 est solidaire en rotation avec la roue 4. La roue dentée 20 comprend une multiplicité de dents 24, régulièrement espacées circonférentiellement autour de l'axe Y-Y'. En particulier, la roue dentée 20 comprend un nombre de dents 24 supérieur ou égal au nombre n de positions angulaires prédéfinies. Dans un mode de réalisation particulier décrit ici, la roue dentée comprend un nombre de dents 24 égal au nombre n de positions angulaires prédéfinies. Chaque dent 24 comprend un front avant 26, un front arrière 28 et une tête 30 reliant le front avant 26 au front arrière 28.

L'organe de détection 22 est adapté pour détecter le passage des dents 24 de la roue dentée 20 lors de la rotation de la roue 4. L'organe de de détection 22 est par exemple placé en regard du bord denté de la roue dentée.

L'organe de détection 22 détecte le passage des dents de manière magnétique. Dans un mode de réalisation alternatif, l'organe détection 22 détecte le passage des dents de manière optique.

L'organe de détection 22 est adapté pour détecter le front des dents 24 de la roue dentée. Plus particulièrement, l'organe de détection 22 est adapté pour détecter le front avant 26 et/ou le front arrière 28 des dents 24 de la roue dentée. Dans le mode de réalisation présenté, l'organe de détection 22 est adapté pour détecter le front avant 26 des dents 24.

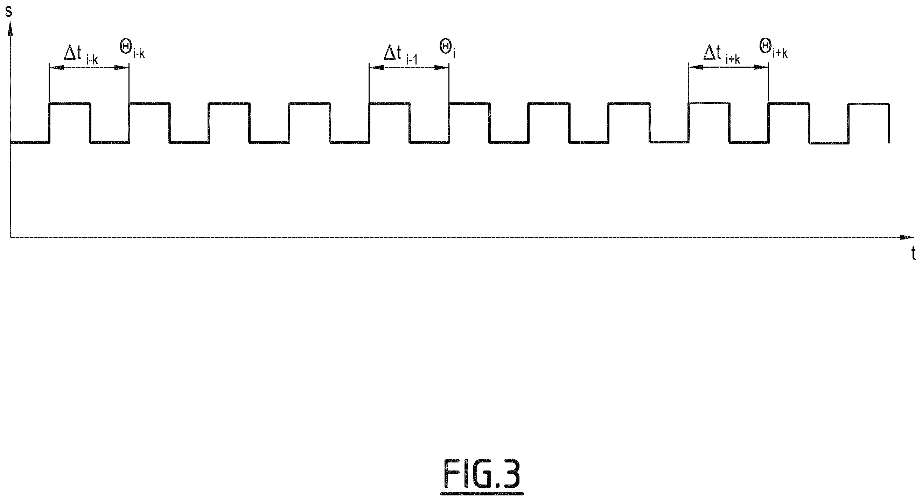

L'organe de détection génère par exemple un signal s au cours du temps, comme représenté dans la figure 3.

L'organe de détection 22 du capteur 14 est configuré pour obtenir, pendant que la roue 4 roule sur la surface de roulement 8, et pour chaque position angulaire $\theta_i$, un paramètre caractérisant la vitesse angulaire de la roue 4 quand la roue est en contact avec la surface de roulement par ladite position angulaire prédéfinie. Plus particulièrement, l'organe de détection 22 du capteur 14 est décalé angulairement de la portion 19 de la roue en contact avec le sol d'un angle A. La vitesse angulaire mesurée pour le front avant de la dent située à $\theta_i$-A caractérise ainsi la vitesse angulaire de la roue quand elle est en contact avec la surface de roulement par la position $\theta_i$, comme illustré en figure 2.

Selon l'invention, l'organe de détection 22 est configuré pour obtenir un écart temporel direct $\Delta T_i$ pour chaque position angulaire $\theta_i$. Le paramètre caractérisant la vitesse angulaire de la roue 4 pour une position angulaire $\theta_i$ est alors l'écart temporel direct $\Delta T_i$.

L'écart temporel direct $\Delta T_i$ correspond à l'écart de temps entre la détection du front avant 26 de deux dents 24 de la roue dentée. L'écart temporel direct $\Delta T_i$ est, dans le mode de réalisation présenté, l'écart de temps entre la détection du front de deux dents consécutives de la roue dentées, et plus particulièrement l'écart de temps entre la détection du front avant 26 de deux dents consécutives de la roue dentée. L'écart temporel direct $\Delta T_i$ est alors l'écart de temps entre la détection du front de la dent situé à la position angulaire $\theta_i$-A et la détection du front de la dent immédiatement précédente. Cet écart temporel direct $\Delta T_i$ correspond ainsi, dans le cas où il y a autant de dents 24 que de positions $\theta_i$, à l'écart de temps entre le passage de la position angulaire $\theta_i$ au point de contact 19 et le passage de la position angulaire $\theta_{i-1}$ au point de contact.

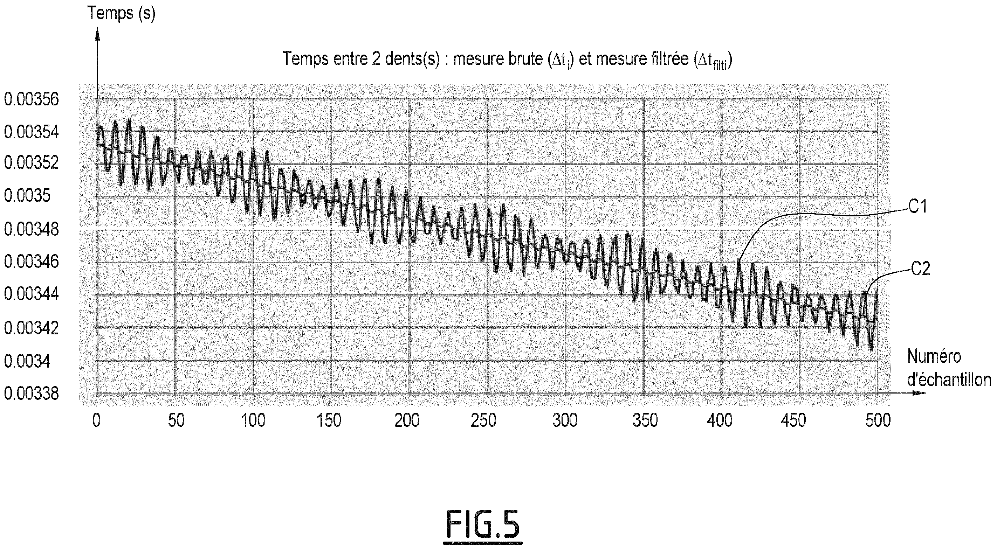

Un exemple de la mesure du temps entre deux dents 24 successives faite par l'organe de détection 22 est par exemple présenté en figure 5, qui représente le temps entre deux dents successives 24 en fonction d'un numéro d'échantillon de mesure (chaque échantillon de mesure étant associé à une position angulaire $\theta_i$). Sur la figure 5, une première courbe C1 représente la mesure de l'écart temporel direct $\Delta T_i$ entre deux dents 24 successives et une deuxième courbe C2 représente un écart temporel filtré $\Delta T_{filti}$ dont le calcul est décrit par la suite, pour un train circulant à 40km/h en légère accélération, une roue de diamètre nominal de 1 mètre et un nombre de dents 24 de roue dentée égal à 80.

Le dispositif de contrôle de déformation de la roue 10 comprend un module de calcul 32.

Le module de calcul 32 est configuré pour calculer la valeur du rayon de la roue $R_i$ pour chaque position angulaire prédéfinie $\theta_i$ en utilisant le paramètre caractérisant la vitesse angulaire obtenu pour la position angulaire prédéfinie. En particulier, le module de calcul est configuré pour calculer la valeur du rayon de la roue $R_i$ pour la position $\theta_i$ en utilisant l'écart temporel direct $\Delta T_i$ associé à la position angulaire $\theta_i$.

Le module de calcul 32 est par ailleurs configuré pour calculer la valeur du rayon de la roue $R_i$ pour la position angulaire prédéfinie $\theta_i$ en utilisant l'écart temporel filtré $\Delta T_{filti}$ représenté sur la figure 5, associé à la position angulaire prédéfinie $\theta_i$. L'écart temporel filtré $\Delta T_{filti}$ associé à la position angulaire prédéfinie $\theta_i$ correspond à une moyenne pondérée d'écarts temporels directs $\Delta T_i$ pour une multiplicité de position angulaires prédéfinies $\theta_i$.

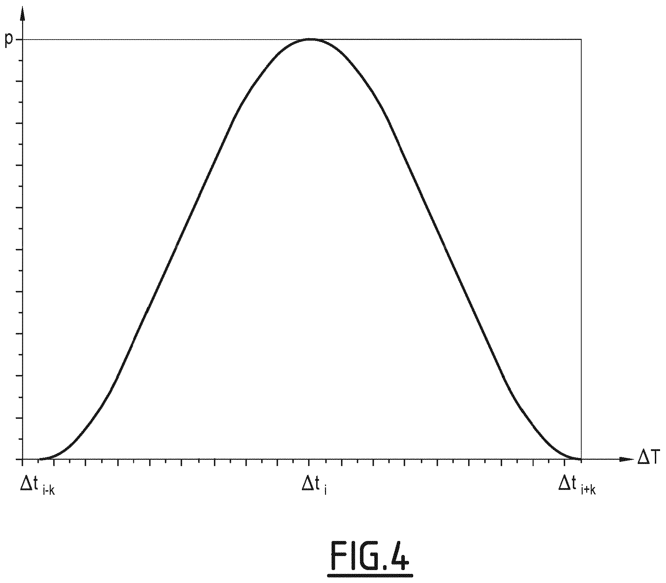

Le module de calcul 32 est, selon l'invention, configuré pour calculer l'écart temporel filtré $\Delta T_{filti}$ en pondérant les écarts temporels directs $\Delta T_i$ pour une multiplicité de positions angulaires prédéfinies par une fenêtre de Hann. Une telle fenêtre de pondération est par exemple visible en figure 4, où p est un coefficient de pondération. Le module de calcul 32 est notamment configuré pour effectuer une moyenne pondérée des k écarts temporels directs dont la position angulaire précède la position angulaire prédéfinie $\theta_i$ et des k écarts temporels directs dont la position angulaire suit la position angulaire prédéfinie, avec k un entier naturel inférieur à la moitié de n. En d'autres termes, l'écart temporel filtré $\Delta T_{filti}$ pour une position angulaire prédéfinie $\theta_i$ est calculé en utilisant les écarts temporels directs $\Delta T_i$ pour les positions angulaires comprises entre $\theta_{i-k}$ et $\theta_{i+k}$. En particulier, et dans le mode de réalisation préféré, k est l'entier naturel le plus proche du huitième du nombre de dents n. L'écart temporel filtré $\Delta T_{filti}$ est ainsi calculé en utilisant les écarts temporels directs $\Delta T_i$ associés aux position angulaires $\theta_i$ comprises sur le quart de roue entourant la position angulaire prédéfinie $\theta_i$.

En variante, une fenêtre rectangulaire ou une fenêtre de Hamming ou une fenêtre de Blackman sont propres à être utilisées à la place de la fenêtre de Hann.

Le module de calcul 32 est configuré pour calculer la valeur du rayon $R_i$ de la roue 4 pour chaque position angulaire prédéfinie comme le produit d'un rayon de roue prédéterminé, par exemple un rayon de roue moyen $R_m$, et du ratio entre l'écart temporel direct $\Delta T_i$ et de l'écart temporel filtré $\Delta T_{filti}$ obtenu pour ladite position angulaire $\theta_i$ prédéfinie. Le module de calcul est configuré pour calculer la valeur de $R_i$ de la roue 4 pour chaque position angulaire prédéfinie avec l'équation suivante.

[Math 1]

$$R_i = R_m . \frac{\Delta T_i}{\Delta T_{filti}}$$

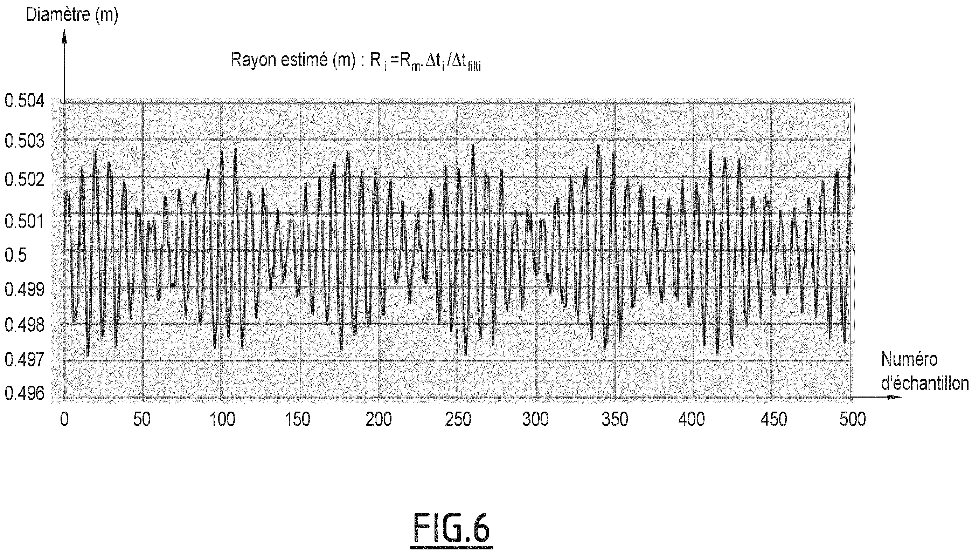

Un exemple de la valeur du rayon estimé pour l'écart temporel direct et l'écart temporel filtré pour le cas des courbes représentées en figure 5 pour un train circulant à 40km/h en légère accélération, une roue de diamètre nominal de 1 mètre et un nombre de dents 24 de roue dentée égal à 80 est donné par le graphique représenté en figure 6 représentant la valeur du rayon estimé en fonction du numéro d'échantillon.

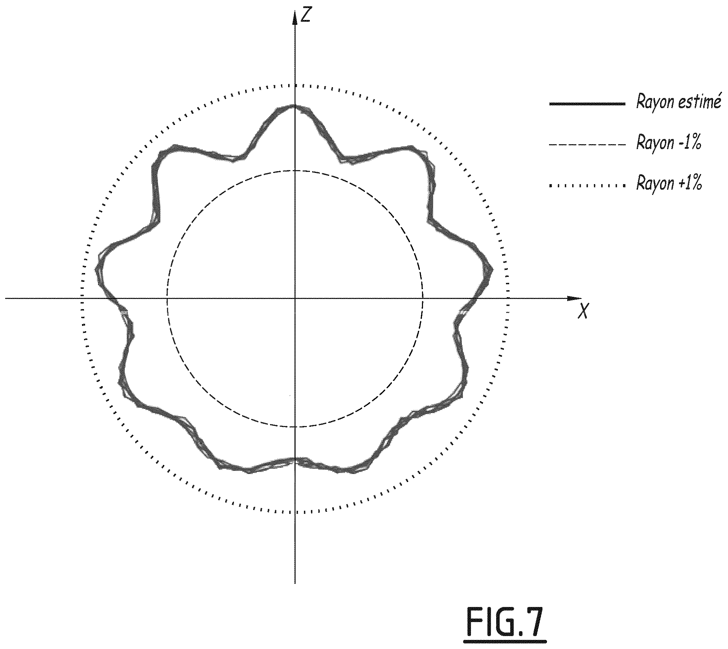

La figure 7 permet de visualiser la déformation de la roue obtenue via le graphique représenté en figure 6, avec plusieurs tours de roue superposés qui permettent l'élimination des bruits de mesure. On observe ainsi une déformation de la roue de type facettes dans cet exemple.

Un procédé de contrôle de déformation d'une roue selon l'invention va maintenant être présenté. Le système de contrôle de déformation de roue 10 précédemment décrit est spécialement adapté pour mettre en œuvre le procédé maintenant présenté. Le procédé maintenant présenté est par ailleurs spécialement adapté pour être mis en œuvre par le système de contrôle de déformation de roue 10 précédemment décrit.

Le procédé comporte une étape d'obtention du paramètre caractérisant la vitesse angulaire de la roue pour la pluralité de positions angulaires prédéfinies $\theta_i$ suivi d'une étape de calcul d'une valeur de rayon $R_i$ de la roue 4 pour chaque position angulaire prédéfinie $\theta_i$.

L'étape d'obtention comprend l'obtention, pour la pluralité de positions angulaires $\theta_i$ prédéfinies sur la roue, pendant que la roue 4 roule sur la surface de roulement 8, d'un paramètre caractérisant une vitesse angulaire de la roue quand la roue 4 est en contact avec la surface de roulement 8 par ladite position angulaire $\theta_i$ prédéfinie.

L'étape d'obtention est notamment mise en œuvre lorsque le véhicule ferroviaire roule à une vitesse sensiblement constante sur la surface de roulement 8. L'étape d'obtention est préférablement mise en œuvre lorsque la roue 4 roule sur la surface de roulement 8 sans glissement.

L'étape d'obtention comprend la mesure par le capteur 14 du paramètre caractérisant la vitesse angulaire de la roue 4.

Lors de l'étape d'obtention, le capteur 14 mesure successivement l'écart temporel direct $\Delta T_i$ pour chaque position angulaire prédéfinie $\theta_i$. L'écart temporel direct $\Delta T_i$ est notamment mesuré lorsqu'une position angulaire prédéfinie $\theta_i$ est en contact avec la surface de roulement 8, ou en d'autre termes lorsque l'organe de détection 22 détecte le front avant 26 d'une dent 24 en une position $\theta_i$ - A décalée angulairement de la position $\theta_i$ de l'angle A. L'écart temporel $\Delta T_i$, correspond alors au temps écoulé entre la détection du front avant 26 d'une dent 24 en la position $\theta_i$ - A et la détection du front avant 26 de la dent 24 la précédant.

Suite à l'obtention des valeurs d'écart temporel direct $\Delta T_i$, une valeur de rayon $R_i$ pour chaque position angulaire $\theta_i$ est calculée lors de l'étape de calcul. L'étape de calcul est notamment mise en œuvre par le module de calcul 32.

Le calcul de chaque rayon de roue $R_i$ utilise l'écart temporel direct $\Delta T_i$ obtenu pour chaque position angulaire $\theta_i$. Le calcul de chaque rayon de roue $R_i$ pour la position angulaire prédéfinie $\theta_i$ utilise par ailleurs l'écart temporel filtré $\Delta T_{filti}$, l'écart temporel filtré étant une moyenne pondérée d'écarts temporels directs $\Delta T_i$ pour une multiplicité de positions angulaires $\theta_i$ prédéfinies. L'écart temporel filtré $\Delta T_{filti}$ est notamment calculé en pondérant les écarts temporels directs $\Delta T_i$ pour une multiplicité de positions angulaires prédéfinies par une fenêtre de Hann.

Selon un mode de réalisation particulier, l'étape d'obtention s'étend par exemple sur plusieurs tours de roue. L'étape d'obtention s'étend avantageusement sur au moins quatre tours de roue. Pour chaque tour de roue, un écart temporel direct $\Delta T_i$ pour une position angulaire prédéfinie $\theta_i$ est obtenu. L'écart temporel direct $\Delta T_i$ propre à un tour de roue permet de calculer un écart temporel filtré $\Delta T_{filti}$ propre à un tour de roue et un rayon de roue $R_i$ propre à un tour de roue pour une position angulaire prédéfinie $\theta_i$.

Le procédé de contrôle de déformation de roue comprend alors, lors de l'étape de calcul, le calcul d'au moins quatre valeurs de rayon de roue $R_i$ pour chaque position angulaire $\theta_i$ prédéfinie. L'étape de calcul comprend le calcul d'une valeur de rayon de roue consolidée $R_{ic}$ pour chaque position angulaire prédéfinie, la valeur de rayon de roue consolidée $R_{ic}$ pour chaque position angulaire $\theta_i$ prédéfinie étant calculée en utilisant les au moins quatre valeurs de rayon de roue $R_i$ calculées pour chaque position angulaire prédéfinie $\theta_i$.

Le procédé de contrôle de déformation de roue selon l'invention permet non seulement de déterminer les déformation d'une roue mais permet par ailleurs de quantifier ces déformations et d'évaluer la forme réelle de la roue. Il permet notamment de déterminer le rayon de roue $R_i$ propre pour chaque position angulaire prédéfinie $\theta_i$.

L'utilisation d'un capteur 14 comprenant une roue dentée 20 ainsi qu'un organe de détection 22 est particulièrement avantageuse puisqu'elle permet un contrôle économique des déformations d'une roue le capteur 14 étant par exemple un composant d'un anti enrayeur du véhicule ferroviaire.

Le calcul de la valeur du rayon en utilisant l'écart temporel filtré $\Delta T_{filti}$ et notamment l'utilisation d'une fenêtre de Hann permet d'améliorer la précision du calcul des déformations de la roue 4.

Le calcul d'un rayon de roue consolidé $R_{ic}$ permet aussi d'améliorer la précision du calcul des déformations de la roue en excluant de potentielles anomalies lors de la mesure.

## Revendications

1. Procédé de contrôle de déformation d'une roue (4), le procédé comprenant les étapes suivantes :

   - pendant que la roue (4) roule sur une surface de roulement (8), obtention, pour une pluralité de positions angulaires ($\theta_i$) prédéfinies sur la roue, d'un paramètre caractérisant une vitesse angulaire de la roue (4) quand la roue (4) est en contact avec la surface de roulement (8) au niveau de ladite position angulaire ($\theta_i$) prédéfinie ; et
   - calcul d'une valeur de rayon ($R_i$) de la roue (4) pour chaque position angulaire ($\theta_i$) prédéfinie en utilisant le paramètre caractérisant la vitesse angulaire obtenu pour ladite position angulaire ($\theta_i$), dans lequel le paramètre caractérisant la vitesse angulaire de la roue (4) est mesuré par un capteur (14), le capteur (14) comprenant une roue dentée (20) et un organe de détection (22) configuré pour détecter un front (26, 28) de chaque dent de la roue dentée,

   le paramètre caractérisant la vitesse angulaire de la roue (4) étant un écart temporel direct pour la position angulaire ($\theta_i$) prédéfinie, l'écart temporel direct étant l'écart de temps entre la détection du front (26, 28) de deux dents (24) de la roue dentée (20), les deux dents (24) étant avantageusement deux dents (24) consécutives de la roue dentée (20),
   le calcul d'une valeur de rayon ($R_i$) de la roue pour chaque position angulaire ($\theta_i$) prédéfinie utilisant un écart temporel filtré, l'écart temporel filtré étant une moyenne pondérée d'écarts temporels directs pour une multiplicité de positions angulaires ($\theta_i$) prédéfinies,
   l'écart temporel filtré étant calculé en pondérant les écarts temporels directs pour une multiplicité de positions angulaires ($\theta_i$) prédéfinies par une fenêtre de Hann.

2. Procédé de contrôle de déformation d'une roue selon la revendication 1, dans lequel le calcul d'une valeur de rayon ($R_i$) de la roue pour chaque position angulaire ($\theta_i$) prédéfinie est le produit d'un rayon de roue prédéterminé et du ratio entre l'écart temporel direct et de l'écart temporel filtré obtenu pour ladite position angulaire ($\theta_i$) prédéfinie.

3. Procédé de contrôle de déformation de roue (4) selon la revendication 1 ou 2, le procédé comprenant le calcul d'au moins quatre valeurs de rayon ($R_i$) de roue pour chaque position angulaire ($\theta_i$) prédéfinie, une valeur de rayon de roue consolidée pour chaque position angulaire ($\theta_i$) prédéfinie étant calculée en utilisant au moins quatre valeurs de rayon de roue calculées pour chaque position angulaire ($\theta_i$) prédéfinie.

4. Système (10) de contrôle de déformation de roue (4) comprenant un capteur (14) et un dispositif (12) de contrôle de déformation d'une roue (4) connecté au capteur (14), le capteur (14) étant configuré pour obtenir pendant que la roue (4) roule sur une surface de roulement (8), pour une pluralité de positions angulaires ($\theta_i$) prédéfinies sur la roue (4), un paramètre caractérisant une vitesse angulaire de la roue (4) quand la roue (4) est en contact avec la surface de roulement (8) au niveau de ladite position angulaire ($\theta_i$) prédéfinie, le dispositif (12) comprenant un module de calcul (32) d'une valeur de rayon ($R_i$) de la roue (4) pour chaque position angulaire ($\theta_i$) prédéfinie en utilisant le paramètre caractérisant la vitesse angulaire obtenu pour ladite position angulaire ($\theta_i$),

   dans lequel le paramètre caractérisant la vitesse angulaire de la roue (4) est mesuré par le capteur (14), le capteur (14) comprenant une roue dentée (20) et un organe de détection (22) configuré pour détecter un front (26, 28) de chaque dent de la roue dentée,

le paramètre caractérisant la vitesse angulaire de la roue (4) étant un écart temporel direct pour la position angulaire ($\theta_i$) prédéfinie, l'écart temporel direct étant l'écart de temps entre la détection du front (26, 28) de deux dents (24) de la roue dentée (20), les deux dents (24) étant avantageusement deux dents (24) consécutives de la roue dentée (20), le calcul d'une valeur de rayon (Ri) de la roue pour chaque position angulaire ($\theta$i) prédéfinie utilisant un écart temporel filtré, l'écart temporel filtré étant une moyenne pondérée d'écarts temporels directs pour une multiplicité de positions angulaires ($\theta$i) prédéfinies,

l'écart temporel filtré étant calculé en pondérant les écarts temporels directs pour une multiplicité de positions angulaires ($\theta$i) prédéfinies par une fenêtre de Hann.

5. Système (10) de contrôle de déformation de roue (4) selon la revendication 4, destiné à être embarqué à bord d'un véhicule ferroviaire (1).

6. Véhicule, notamment ferroviaire, comprenant au moins une roue et un système de contrôle de déformation de la roue selon la revendication 4 ou 5.


**Patentansprüche**

1. Verfahren zur Verformungsüberwachung eines Rades (4), wobei das Verfahren die folgenden Schritte umfasst:

- während das Rad (4) auf einer Lauffläche (8) rollt, Erhalt eines Parameters für eine Vielzahl von vordefinierten Winkelpositionen ($\Theta_i$) am Rad, der eine Winkelgeschwindigkeit des Rades (4) charakterisiert, wenn das Rad (4) an der vordefinierten Winkelposition ($\Theta_i$) mit der Lauffläche (8) in Kontakt ist; und
- Berechnung eines Radiuswertes ($R_i$) des Rades (4) für jede vordefinierte Winkelposition ($\Theta_i$) unter Verwendung des für die Winkelposition ($\Theta_i$) erhaltenen, die Winkelgeschwindigkeit charakterisierenden Parameters, wobei der die Winkelgeschwindigkeit des Rades (4) charakterisierende Parameter durch einen Sensor (14) gemessen wird, wobei der Sensor (14) ein Zahnrad (20) und ein Erfassungselement (22) umfasst, das dazu ausgebildet ist, eine Vorderseite (26, 28) jedes Zahns des Zahnrads zu erfassen,

wobei der die Winkelgeschwindigkeit des Rads (4) charakterisierende Parameter eine direkte Zeitabweichung für die vordefinierte Winkelposition ($\Theta_i$) ist, wobei die direkte Zeitabweichung die Zeitabweichung zwischen der Erfassung der Vorderseite (26, 28) zweier Zähne (24) des Zahnrades (20) ist, wobei die beiden Zähne (24) vorteilhafterweise zwei aufeinanderfolgende Zähne (24) des Zahnrades (20) sind, wobei zur Berechnung eines Radradiuswertes ($R_i$) für jede vordefinierte Winkelposition ($\Theta_i$) eine gefilterte Zeitabweichung verwendet wird, wobei die gefilterte Zeitabweichung ein gewichteter Mittelwert aus direkten Zeitabweichungen für eine Vielzahl von vordefinierten Winkelpositionen ($\Theta_i$) ist, wobei die gefilterte Zeitabweichung durch Gewichten der direkten Zeitabweichungen für eine Vielzahl von vordefinierten Winkelpositionen ($\Theta_i$) mit einem Hann-Fenster berechnet wird.

2. Verfahren zur Verformungsüberwachung eines Rades nach Anspruch 1, wobei die Berechnung eines Radradiuswertes ($R_i$) für jede vordefinierte Winkelposition ($\Theta_i$) das Produkt aus einem vordefinierten Radradius und dem Verhältnis zwischen der direkten Zeitabweichung und der gefilterten Zeitabweichung ist, die für die vordefinierte Winkelposition ($\Theta_i$) erhalten wurden.

3. Verfahren zur Verformungsüberwachung eines Rades (4) nach Anspruch 1 oder 2, wobei das Verfahren die Berechnung von mindestens vier Radradiuswerten ($R_i$) für jede vordefinierte Winkelposition ($\Theta_i$) umfasst, wobei ein konsolidierter Radradiuswert für jede vordefinierte Winkelposition ($\Theta_i$) unter Verwendung von mindestens vier für jede vordefinierte Winkelposition ($\Theta_i$) berechneten Radradiuswerten berechnet wird.

4. System (10) zur Verformungsüberwachung eines Rades (4), umfassend einen Sensor (14) und eine mit dem Sensor (14) verbundene Vorrichtung (12) zur Verformungsüberwachung eines Rades (4), wobei der Sensor (14) dazu ausgebildet ist, während des Rollens des Rades (4) auf einer Lauffläche (8) für eine Vielzahl von vordefinierten Winkelpositionen ($\Theta_i$) am Rad (4) einen Parameter zu erfassen, der eine Winkelgeschwindigkeit des Rades (4) charakterisiert, wenn das Rad (4) an der vordefinierten Winkelposition ($\Theta_i$) mit der Lauffläche (8) in Kontakt ist, wobei die Vorrichtung (12) ein Modul (32) zum Berechnen eines Radiuswertes ($R_i$) des Rades (4) für jede vordefinierte

Winkelposition ($\Theta_i$) unter Verwendung des für die Winkelposition ($\Theta_i$) erhaltenen, die Winkelgeschwindigkeit charakterisierenden Parameters umfasst,

wobei der die Winkelgeschwindigkeit des Rades (4) charakterisierende Parameter durch den Sensor (14) gemessen wird, wobei der Sensor (14) ein Zahnrad (20) und ein Erfassungselement (22) umfasst, das dazu ausgebildet ist, eine Vorderseite (26, 28) jedes Zahnes des Zahnrades zu erfassen,
wobei der die Winkelgeschwindigkeit des Rades (4) charakterisierende Parameter eine direkte Zeitabweichung für die vordefinierte Winkelposition ($\Theta_i$) ist, wobei die direkte Zeitabweichung die Zeitabweichung zwischen der Erfassung der Vorderseite (26, 28) zweier Zähne (24) des Zahnrades (20) ist, wobei die beiden Zähne (24) vorteilhafterweise zwei aufeinanderfolgende Zähne (24) des Zahnrades (20) sind, wobei die Berechnung eines Radradiuswertes ($R_i$) für jede vordefinierte Winkelposition ($\Theta_i$) unter Verwendung einer gefilterten Zeitabweichung erfolgt, wobei die gefilterte Zeitabweichung ein gewichteter Mittelwert direkter Zeitabweichungen für eine Vielzahl vordefinierter Winkelpositionen ($\Theta_i$) ist, wobei die gefilterte Zeitabweichung durch Gewichtung der direkten Zeitabweichungen für eine Vielzahl vordefinierter Winkelpositionen ($\Theta_i$) durch ein Hann-Fenster berechnet wird.

**5.** System (10) zur Verformungsüberwachung eines Rades (4) nach Anspruch 4, das in einem Schienenfahrzeug (1) eingebaut ist.

**6.** Fahrzeug, insbesondere Schienenfahrzeug, umfassend mindestens ein Rad und ein System zur Verformungsüberwachung des Rades nach Anspruch 4 oder 5.

**Claims**

**1.** A method for controlling the deformation of a wheel (4), the method comprising the following steps:

- while the wheel (4) rolls on a rolling surface (8), obtaining, for a plurality of predefined angular positions ($\theta_i$) on the wheel, a parameter characterising an angular speed of the wheel (4) when the wheel (4) is in contact with the rolling surface (8) at said predefined angular position ($\theta_i$); and
- calculating a radius value ($R_i$) of the wheel (4) for each predefined angular position ($\theta_i$) using the parameter characterising the angular speed obtained for said angular position ($\theta_i$), wherein the parameter characterising the angular speed of the wheel (4) is measured by a sensor (14), the sensor (14) comprising a gear wheel (20) and a detection member (22) configured to detect an edge (26, 28) of each tooth of the gear wheel,
the parameter characterising the angular speed of the wheel (4) being a direct time difference for the predefined angular position ($\theta_i$), the direct time difference being the time difference between the detection of the edge (26, 28) of two teeth (24) of the gear wheel (20), the two teeth (24) advantageously being two consecutive teeth (24) of the gear wheel (20),
calculating a radius value ($R_i$) of the wheel for each predefined angular position ($\theta_i$) using a filtered time difference, the filtered time difference being a weighted average of direct time differences for a multiplicity of predefined angular positions ($\theta_i$),
the filtered time difference being calculated by weighting the direct time differences for a multiplicity of angular positions ($\theta_i$) predefined by a Hann window.

**2.** The method for controlling the deformation of a wheel according to claim 1, wherein calculating a radius value ($R_i$) of the wheel for each predefined angular position ($\theta_i$) is the product of a predetermined wheel radius and the ratio between the direct time difference and the filtered time difference obtained for said predefined angular position ($\theta_i$).

**3.** The wheel deformation control method (4) according to claim 1 or 2, the method comprising calculating at least four wheel radius values ($R_i$) for each predefined angular position ($\theta_i$), a consolidated wheel radius value for each predefined angular position ($\theta_i$) being calculated using at least four wheel radius values calculated for each predefined angular position ($\theta_i$).

**4.** A system (10) for controlling the deformation of a wheel (4) comprising a sensor (14) and a device (12) for controlling the deformation of a wheel (4) connected to the sensor (14), the sensor (14) being configured to obtain, while the wheel (4) rolls on a rolling surface (8), for a plurality of predefined angular positions ($\theta_i$) on the wheel (4), a parameter characterising an angular speed of the wheel (4) when the wheel (4) is in contact with the rolling surface (8) at said predefined angular position ($\theta_i$), the device (12) comprising a module (32) for calculating a radius value ($R_i$) of the

wheel (4) for each predefined angular position ($\theta_i$) using the parameter characterising the angular speed obtained for said angular position ($\theta_i$),

wherein the parameter characterising the angular speed of the wheel (4) is measured by the sensor (14), the sensor (14) comprising a gear wheel (20) and a detection member (22) configured to detect an edge (26, 28) of each tooth of the gear wheel, the parameter characterising the angular speed of the wheel (4) being a direct time difference for the predefined angular position ($\theta_i$), the direct time difference being the time difference between the detection of the edge (26, 28) of two teeth (24) of the gear wheel (20), the two teeth (24) advantageously being two consecutive teeth (24) of the gear wheel (20), calculating a radius value (Ri) of the wheel for each predefined angular position ($\theta i$) using a filtered time difference, the filtered time difference being a weighted average of direct time differences for a multiplicity of predefined angular positions ($\theta i$), the filtered time difference being calculated by weighting the direct time differences for a multiplicity of angular positions ($\theta i$) predefined by a Hann window.

5. The system (10) for controlling the deformation of a wheel (4) according to claim 4, intended to be on board a rail vehicle (1).

6. A vehicle, in particular a railvehicle, comprising at least one wheel and a system for controlling the deformation of the wheel according to claim 4 or 5.

FIG.2

FIG.3

FIG.4

FIG.5

Diamètre (m)

Rayon estimé (m) : $R_i = R_m \cdot \Delta t_i / \Delta t_{filti}$

Numéro d'échantillon

<u>FIG.6</u>

EP 3 835 716 B1

FIG.7

15

## RÉFÉRENCES CITÉES DANS LA DESCRIPTION

**Documents brevets cités dans la description**

- US 4815004 A
- US 2003160133 A1
- EP 1559625 A